# FASCICULE DE BREVET EUROPEEN

(11) **EP 3 087 719 B1**
(45) Date de publication et mention de la délivrance du brevet: **28.02.2018**
(21) Numéro de dépôt: 14828215.5
(22) Date de dépôt: 16.12.2014
(51) Int. Cl.: H04L 29/06

(54) **PROCÉDÉ DE RALENTISSEMENT D'UNE COMMUNICATION DANS UN RÉSEAU**
VERFAHREN ZUM VERLANGSAMEN EINER KOMMUNIKATION IN EINEM NETZWERK
METHOD OF SLOWING DOWN A COMMUNICATION IN A NETWORK

(30) Priorité: 23.12.2013 FR 1363380
(43) Date de publication de la demande: 02.11.2016
(73) Titulaire: Orange, 75015 Paris (FR)
(72) Inventeur: MITTIG, Karel, F-14000 Caen (FR); DESCHAMPS, Nicolas, F-75014 Paris (FR); GUERID, Hachem, 31023 Bir El Djir (DZ)
(74) Mandataire: Renard, Béatrice
(86) Numéro de dépôt international: PCT/FR2014/053363
(87) Numéro de publication internationale: WO 2015/097363

(56) Documents cités:
- EP-A2- 2 472 822
- WO-A2-2007/050244
- US-A1- 2012 324 113
- David Dagon ET AL: "Modeling Botnet Propagation Using Time Zones", , 1 janvier 2006 (2006-01-01), XP055143960, Extrait de l'Internet: URL:http://www.cs.ucf.edu/~czou/research/b otnet_tzmodel_NDSS06.pdf [extrait le 2014-10-02]
- L. Haig: "LaBrea - A New Approach To Securing Our Networks", , 7 mars 2002 (2002-03-07), XP002730576, Extrait de l'Internet: URL:http://www.sans.org/reading-room/white papers/attacking/labrea-approach-securing- networks-36 [extrait le 2014-10-02]

## Description

L'invention se rapporte au domaine général des télécommunications. Elle concerne plus particulièrement la protection contre des attaques générées dans un réseau à partir d'une pluralité d'ordinateurs commandés par un serveur contrôlé par un attaquant.

Elle trouve une application particulièrement intéressante dans le cadre de la sécurité des réseaux, et notamment dans la protection contre des attaques émanant d'ordinateurs infectés par des logiciels malveillants et organisés en réseau. Le terme anglais « botnet » est habituellement utilisé pour désigner un tel réseau d'ordinateurs infectés et contrôlés à distance par des attaquants à l'insu des utilisateurs légitimes des ordinateurs. Des « botnets » sont habituellement utilisés pour envoyer des communications non sollicitées (on parle habituellement de « spam »), pour perpétrer des attaques d'hameçonnage, ou « phishing » en anglais, destinées à récupérer des informations personnelles, ou pour bénéficier de la puissance de calcul offerte par les ordinateurs du réseau pour effectuer des opérations de calcul distribué, par exemple pour casser des mots de passe, etc.

Un tel réseau d'ordinateurs infectés est commandé par un serveur de commande géré par un attaquant. Le rôle de ce serveur de commande est de permettre d'envoyer des instructions aux ordinateurs infectés du « botnet », comme des ordres d'attaque, des instructions de mise à jour, ou de collecter des informations dérobées par les logiciels malveillants installés sur les ordinateurs du «botnet» à l'insu des utilisateurs légitimes. Afin de communiquer avec leur serveur de commande, les ordinateurs infectés du « botnet », plus précisément les logiciels malveillants installés sur ces ordinateurs, ont besoin de le localiser. Ils utilisent la plupart du temps le protocole « DNS » (de l'anglais « Domain Name System ») qui permet d'obtenir à partir d'un nom de domaine associé à une machine, ici le serveur de commande, l'adresse IP de cette machine. Dans un premier cas, les ordinateurs ont mémorisé le nom de domaine du serveur de commande. Cependant, avoir un nom de domaine fixe facilite l'identification de l'attaquant et la mise en place de contre-mesures destinées à pallier des attaques émanant du réseau d'ordinateurs infectés. Dans un deuxième cas, plus répandu, les ordinateurs infectés utilisent des noms de domaines générés pseudo-aléatoirement. Le serveur de commande et les ordinateurs infectés partagent ainsi un même algorithme de génération de noms de domaine. Le serveur de commande réserve quelques noms de domaines générés par cet algorithme, c'est-à-dire qu'il enregistre auprès d'un serveur DNS du réseau une association entre les quelques noms qu'il souhaite réserver et l'adresse IP du serveur de commande. Un ordinateur infecté émet alors des requêtes de résolution successives avec les noms de domaine générés pseudo-aléatoirement jusqu'à recevoir une réponse du serveur DNS précisant une adresse IP qui correspond à l'adresse IP du serveur de commande. Ces quelques noms de domaine réservés constituent des points de rendez-vous entre les ordinateurs infectés et le serveur de commande. Les points de rendez-vous permettent aux attaquants de rendre leur « botnet » plus résilients aux contre-mesures classiques.

On comprend que pour pallier les attaques émanant d'un « botnet », il est important de localiser et de paralyser les communications entre le serveur de commande du « botnet » et les ordinateurs infectés. Actuellement, plusieurs méthodes existent.

Une première méthode connue consiste à mettre en place une liste noire de noms de domaine malveillants au niveau des serveurs DNS des fournisseurs d'accès internet. La liste noire est construite par exemple par désassemblage du code d'un logiciel malveillant et par obtention de l'algorithme de génération pseudo-aléatoire de noms de domaine. Des demandes de résolution relatives à des noms de domaine qui figurent dans la liste noire peuvent ainsi être interceptées par le serveur DNS, et retransmises à un serveur de sécurité pour traitement. Une adresse IP invalide ou une erreur DNS peut ensuite être fournie en réponse à la requête de résolution. Cependant, en cas d'échec de la connexion ou d'erreur DNS, les logiciels malveillants testent d'autres points de rendez-vous possibles jusqu'à aboutir sur un point de rendez-vous valide.

Une autre méthode connue consiste, suite à une requête DNS concernant un nom de domaine figurant dans la liste noire des noms de domaine, à répondre à la requête de résolution en envoyant l'adresse IP d'un serveur de sécurité contrôlé par une entité d'administration de la sécurité. Le serveur de sécurité se substitue alors au serveur de contrôle de l'attaquant dans la communication avec les ordinateurs infectés. Le logiciel malveillant tente alors d'établir une connexion avec le serveur de sécurité en croyant se connecter au serveur de commande. Le serveur de sécurité exploite alors cette connexion et envoie des commandes aux machines infectées afin de perturber, voire bloquer le fonctionnement du logiciel malveillant. Cette solution présente l'avantage que le logiciel malveillant ne cherche pas à se connecter à un autre point de rendez-vous. Cependant une parade mise en place par les attaquants consiste à utiliser des connexions chiffrées, avec des clés de chiffrement partagées entre le serveur de commande et le logiciel malveillant des machines infectées. Ainsi, un serveur de sécurité qui tente d'établir une connexion avec un ordinateur infecté ne peut pas dialoguer avec cet ordinateur puisqu'il ne dispose pas des clés nécessaires au chiffrement/déchiffrement des communications avec l'ordinateur infecté. L'ordinateur infecté, détectant qu'il ne dialogue pas avec le serveur de commande cherche alors à se connecter à un autre point de rendez-vous.

Autres solutions pour pallier ces attaques sont connues des documents: "Modelling Botnet Propagation Using Time Zones", 2006, D.Dagon; US2012/324113 et EP2472822. A l'heure actuelle, il n'existe pas de solution satisfaisante permettant de contrer des attaques issues d'ordinateurs organisés en « botnet » et commandés par un serveur de commande contrôlé par un attaquant.

Un des buts de l'invention est de remédier à des insuffisances/inconvénients de l'état de la technique et/ou d'y apporter des améliorations.

A cette fin, l'invention propose un procédé de ralentissement d'une communication dans un réseau comprenant au moins un ordinateur, ledit ordinateur comprenant un logiciel malveillant visant à établir une communication avec un serveur de commande, ledit procédé comprenant les étapes suivantes, mises en oeuvre par un serveur de sécurité du réseau :
- réception d'une requête de transfert de données en provenance de l'ordinateur, ladite réception indiquant que l'adresse IP du serveur de sécurité a été fournie à l'ordinateur en réponse à une requête de résolution de nom de domaine comprenant un nom de domaine associé à l'adresse IP du serveur de commande, ledit nom de domaine étant compris dans une liste noire de noms de domaine,
caractérisé en ce qu'il comprend également :
- une étape d'attente pendant une durée inférieure à un délai d'expiration pour un protocole de transport transportant des paquets de la communication, une session étant maintenue pendant ce délai d'expiration en cas d'inactivité,
- une étape d'envoi d'un paquet comprenant un octet de données généré pseudo-aléatoirement afin de maintenir la session active.

Ainsi, l'invention permet de maintenir une connexion active entre le serveur de sécurité et l'ordinateur infecté, plus précisément avec le logiciel malveillant de l'ordinateur, durant une très longue période. Un volume minimal de données étant transmis au logiciel malveillant, celui-ci ne détecte qu'il communique avec un serveur autre que son serveur de commande qu'après un laps de temps important. Ainsi, tant que la connexion reste active, le logiciel malveillant ne tente pas de se connecter à d'autres points de rendez-vous. Le procédé s'applique de la même façon dans le cas où les communications entre l'ordinateur infecté et son serveur de commande sont chiffrées puisque le logiciel malveillant ne déchiffre les données reçues que lorsqu'il a reçu un certain volume de données.

Avec le procédé décrit, la connexion peut être ainsi maintenue active plusieurs jours. Le procédé réduit donc l'efficacité des algorithmes de génération de points de rendez-vous dynamiques. Il a pour effet de paralyser les activités du « botnet » et contribue donc à diminuer son impact néfaste sur les réseaux.

Dans un exemple de réalisation, le procédé comprend au moins une itération des étapes d'attente et d'envoi d'un paquet jusqu'à fermeture de la session par l'ordinateur.

La session entre l'ordinateur et le serveur de sécurité est maintenue active jusqu'à ce que l'ordinateur détecte qu'il ne communique pas avec son serveur de commande. En envoyant un unique octet au cours d'une période inférieure mais proche du délai d'expiration du protocole de transport utilisé et en réitérant cet envoi, on comprend que la session peut être maintenue active sur une période très longue, qui peut aller jusqu'à plusieurs jours.

Dans un exemple de réalisation, le procédé comprend en outre :
- une étape de réception d'une requête de résolution de nom de domaine,
- une étape de vérification que le nom de domaine requis appartient à la liste noire des noms de domaine,
- une étape d'envoi, en réponse à la requête, de l'adresse IP du serveur de sécurité.

Dans cet exemple de réalisation, le procédé met en oeuvre les étapes relatives à la résolution de noms de domaine et notamment l'étape consistant à vérifier que le nom de domaine requis appartient ou non à la liste noire des noms de domaine. Ainsi, un dispositif qui met en oeuvre le procédé intègre une fonction de relais DNS apte à vérifier la liste noire. Avec cet exemple de réalisation, le procédé peut être mis en oeuvre dans un équipement de sécurité et ne nécessite donc pas de modifier des serveurs DNS du réseau. Ainsi, l'impact du procédé sur le réseau existant est limité.

Dans un exemple de réalisation, la requête de transfert de données est conforme au protocole TCP.

Le protocole de transport TCP est très largement utilisé par les logiciels malveillants qui infectent les ordinateurs d'un « botnet ». En effet, beaucoup de ces logiciels sont basés sur le protocole http et dans la majorité des cas, les serveurs de commandes sont des sites web piratés. Le procédé décrit ici est donc applicable à de nombreux cas d'attaque par « botnet ».

Dans le cas où le protocole TCP est utilisé, dans un exemple de réalisation, la durée est comprise entre une et deux minutes.

Le délai d'expiration du protocole TCP défini dans la RFC793 est de 5 minutes. Cependant, le délai d'expiration peut être défini différemment par le logiciel malveillant. Avec une durée d'expiration fixée entre 1 et 2 minutes, il y a de fortes probabilités que cette durée soit inférieure au délai d'expiration TCP fixé le cas échéant par le logiciel malveillant. Ainsi, il y a de fortes probabilités qu'avec une durée d'expiration comprise entre 1 et 2 minutes, le procédé soit efficace dans la majorité des cas d'attaque par « botnet ».

Dans un autre exemple de réalisation, la requête de transfert de données est conforme au protocole UDP.

Si la majorité des logiciels malveillants utilisent les protocoles TCP et http pour communiquer avec leur serveur de commande, certains utilisent des protocoles propriétaires sur le protocole UDP afin de rendre difficile leur détection. L'exemple de réalisation basé sur le protocole UDP s'applique à ce type de logiciel malveillant. Ainsi, le procédé s'applique aussi aux logiciels malveillants qui utilisent le protocole TCP.

Dans le cas où le protocole UDP est utilisé, dans un exemple de réalisation, l'entête du paquet envoyé au cours de l'étape d'envoi comprend un champ indiquant qu'une fragmentation IP est mise en oeuvre.

Dans le cas où la fragmentation IP est mise en oeuvre, l'ordinateur infecté qui reçoit le paquet envoyé par le serveur de sécurité se met en attente des paquets IP suivants pendant une durée de 1 à 2 minutes, puis il réassemble le message à partir des paquets reçus avant de le présenter à une application. Ce mécanisme permet ainsi de maintenir artificiellement l'ordinateur infecté dans un état d'attente sur le protocole UDP. Cela améliore l'efficacité du procédé dans le cas du protocole UDP.

L'invention concerne également un serveur de sécurité du réseau, destiné à ralentir une communication dans un réseau comprenant au moins un ordinateur, ledit ordinateur comprenant un logiciel malveillant visant à établir une communication avec un serveur de commande, ledit serveur de sécurité comprenant :
- des moyens de réception d'une requête de transfert de données, agencés pour recevoir en provenance de l'ordinateur une requête de transfert de données, la réception de ladite requête indiquant que l'adresse IP du serveur de sécurité a été fournie à l'ordinateur en réponse à une requête de résolution de nom de domaine comprenant un nom de domaine associé à l'adresse IP du serveur de commande, ledit nom de domaine étant compris dans une liste noire de noms de domaine,
- des moyens d'attente, agencés pour attendre pendant une durée inférieure à un délai d'expiration pour un protocole de transport transportant des paquets de la communication, une session étant maintenue pendant ce délai d'expiration en cas d'inactivité,
- des moyens d'envoi de paquets, agencés pour envoyer un paquet comprenant un octet de données généré pseudo-aléatoirement afin de maintenir la session active.

Dans un exemple de réalisation, le serveur de sécurité comprend :
- des moyens de réception d'une requête de résolution de nom de domaine, agencés pour recevoir une requête de résolution de nom de domaine,
- des moyens de vérification, agencés pour vérifier que le nom de domaine requis appartient à une liste noire de noms de domaine,
- des moyens d'envoi d'adresses, agencés pour envoyer, en réponse à la requête, l'adresse IP du serveur de sécurité.

L'invention concerne aussi une passerelle résidentielle du réseau comprenant un serveur de sécurité selon l'invention.

L'invention porte également sur un programme d'ordinateur destiné à être installé dans une mémoire d'un serveur de sécurité, comprenant des instructions pour la mise en oeuvre des étapes du procédé de ralentissement d'une communication dans un réseau tel que décrit précédemment, lorsque le programme est exécuté par un processeur du serveur de sécurité.

L'invention concerne aussi un support de données sur lequel est enregistré le programme selon la revendication 11.

D'autres caractéristiques et avantages de la présente invention seront mieux compris de la description et des dessins annexés parmi lesquels :
- la figure 1 présente une architecture de sécurité, selon un exemple de réalisation de l'invention ;
- la figure 2 présente les étapes d'un procédé de ralentissement d'une communication dans un réseau, selon un exemple de réalisation ;
- la figure 3 est une représentation schématique d'un serveur de sécurité, selon un exemple de réalisation de l'invention.

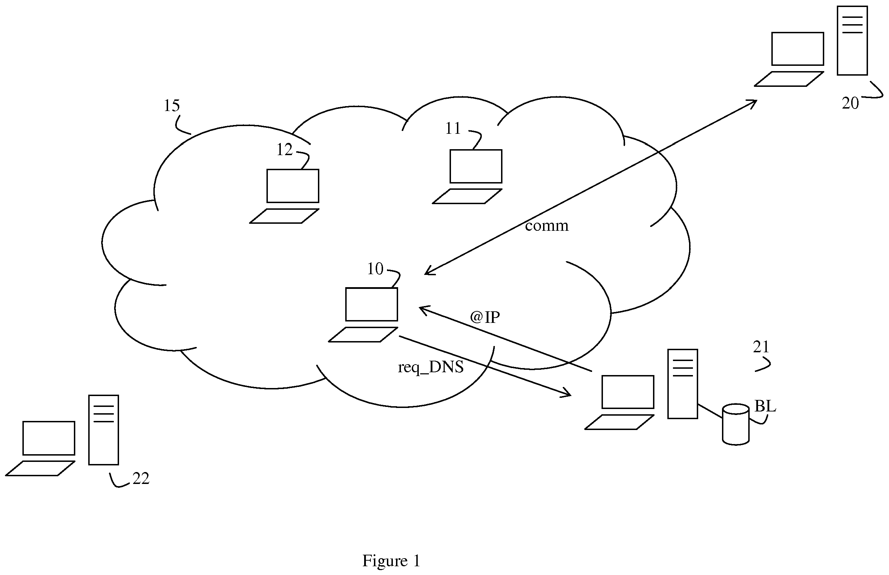

Une architecture réseau dans laquelle est mise en oeuvre le procédé de ralentissement d'une communication dans un réseau, selon un premier exemple de réalisation de l'invention, va maintenant être décrite en relation avec la figure 1.

Des ordinateurs 10, 11, 12, par exemple des terminaux utilisateur, qu'une personne malveillante, ou attaquant contrôle, font partie d'un réseau 15 d'ordinateurs infectés (le terme habituellement utilisé pour ce genre de réseau est le terme anglais « botnet »). L'attaquant, qui a pris le contrôle des ordinateurs du « botnet » commande les différents ordinateurs infectés au moyen d'un serveur de commande 20. Pour prendre le contrôle des ordinateurs 10, 11, 12, l'attaquant a installé à l'insu des utilisateurs légitimes des ordinateurs 10, 11, 12 un ou plusieurs logiciels malveillants (on parle de malware en anglais), ou virus, destinés à permettre à l'attaquant d'interagir avec les ordinateurs infectés 10, 11, 12 et de les commander à travers le serveur de commande 20. Le logiciel malveillant permet ainsi à l'attaquant de commander les ordinateurs infectés 10, 11, 12 en envoyant par exemple des instructions aux ordinateurs 10, 11, 12, des ordres d'attaques d'une autre machine (non représentée), des instructions de mise à jour ; il permet également de dérober des informations sur les ordinateurs infectés 10, 11, 12, par exemple des données personnelles d'utilisateur, destinées à être utilisées par l'attaquant à des fins frauduleuses.

Afin d'établir une communication entre l'un des ordinateurs infectés 10, 11, 12, par exemple l'ordinateur 10 et le serveur de commande 20, il est habituel qu'une communication soit établie à l'initiative du logiciel malveillant, donc depuis l'ordinateur infecté 10, vers le serveur de commande 20 afin que le logiciel malveillant, donc l'ordinateur infecté 10 se connecte au serveur de commande 20.

Cette communication est établie de manière classique à travers le réseau Internet. Il est habituel que le logiciel malveillant soit programmé pour calculer des noms de domaine au moyen d'un algorithme de génération pseudo-aléatoire, et pour envoyer à un serveur DNS 21 (de l'anglais « Domain Name System ») des requêtes DNS successives comprenant ces noms de domaine, jusqu'à obtenir en réponse une adresse IP valide. En effet, dans le cadre de la mise en place d'un « botnet », il est habituel, pour pallier d'éventuelles contre-mesures mises en oeuvre dans le réseau et destinées à protéger les infrastructures réseau contre les attaques par « botnet », qu'une pluralité de noms de domaine soit calculée, d'une part par le serveur de commande 20, et d'autre part par le logiciel malveillant, et que parmi ces noms de domaines certains soient préalablement réservés par l'attaquant et associés dans le serveur DNS 21 à l'adresse IP du serveur de commande 20. Ainsi, le serveur de commande 20 a mémorisé le même algorithme de génération pseudo-aléatoire de noms de domaine et a préalablement réservé plusieurs noms de domaines générés au moyen de ce même algorithme. On entend par réservation d'un nom domaine, l'enregistrement auprès du serveur DNS 21 d'une correspondance entre une adresse IP, en l'espèce l'adresse IP du serveur de commande 20 et un nom compréhensible et facile à retenir appelé nom de domaine, ou « FQDN » (de l'anglais « Fully Qualified Domain Name »), par exemple www.monsite.fr. Ces noms de domaines préalablement réservés auprès du serveur DNS 21 constituent des points de rendez-vous par l'intermédiaire desquels l'ordinateur infecté 10 et le serveur de commande 20 sont susceptibles de communiquer. Lorsque le logiciel malveillant envoie une requête DNS qui comprend un nom de domaine qui n'a pas été préalablement enregistré dans le serveur DNS 21, il reçoit en réponse une erreur DNS.

Le serveur DNS 21 est par exemple un serveur DNS d'un Fournisseur d'Accès Internet (ou « FAI »). Il est en charge de la résolution des noms de domaine. Il est connu que lorsque le serveur DNS 21 reçoit une requête de résolution, il vérifie d'abord s'il possède en mémoire cache l'adresse IP associée au nom de domaine requis. Si ce n'est pas le cas, il est connu qu'il s'adresse à un autre serveur DNS du réseau Internet afin de demander la résolution. Pour des raisons de lisibilité, seul le serveur DNS 21 est représenté. Les ordinateurs infectés 10, 11, 12 sont paramétrés pour envoyer toutes les requêtes DNS req_DNS au serveur DNS 21. Dans l'exemple de réalisation décrit ici, le serveur DNS 21 est adapté pour mémoriser une liste noire BL de noms de domaine. Par ailleurs, il comprend des instructions de code pour comparer un nom de domaine compris dans une requête de résolution DNS qu'il reçoit, à la liste noire BL qu'il a mémorisée et pour répondre à la requête avec une adresse IP d'un serveur de sécurité 22 lorsque le nom de domaine reçu dans la requête figure dans la liste noire BL des noms de domaine.

La liste noire de noms de domaine BL est générée conformément à une méthode connue. Une première méthode repose, après identification d'une machine infectée, sur la mise en oeuvre d'un désassemblage du code du logiciel malveillant qui infecte la machine et l'identification dans ce code des instructions du générateur de noms de domaines (on parle habituellement de « reverse engineering » en anglais). Une deuxième méthode propose, après identification d'une machine infectée, de stimuler le logiciel malveillant et de superviser les échanges réseau qu'il initie afin d'identifier les liens DNS qu'il tente d'établir, et de récupérer les noms de domaines qui figurent dans les requêtes DNS qu'il envoie. Une troisième méthode propose de superviser et analyser un trafic DNS dans un réseau, et plus précisément le trafic DNS en erreur, c'est-à-dire les requêtes DNS qui provoquent une erreur DNS. Ces erreurs sont consécutives à des requêtes DNS qui comprennent des noms de domaines qui ne sont pas enregistrés au niveau des serveurs DNS du réseau. Dans un trafic réseau normal, on estime que le taux d'erreur dans des requêtes DNS est de l'ordre de 10%. Dans un réseau qui comprend une pluralité d'ordinateurs infectés et organisés en « botnet », ce taux d'erreur est bien supérieur à 10%. Ainsi, lorsque le taux d'erreur des requêtes DNS est anormalement élevé, une analyse approfondie des requêtes est mise en oeuvre. Lorsque l'analyse des requêtes DNS émises par des ordinateurs montre des similitudes, alors on estime que ces ordinateurs sont infectés par le même logiciel malveillant. La liste noire BL de noms de domaine est alors construite à partir des noms de domaines compris dans les requêtes DNS émises par les ordinateurs identifiés comme étant infectés par le même logiciel malveillant. Dans un exemple de réalisation, cette liste noire BL est générée par un autre serveur de sécurité (non représenté sur la figure 1) maîtrisé par le FAI, ou par une entité de sécurité non représentée, puis transmise au serveur DNS 21 pour enregistrement. L'autre serveur de sécurité peut mettre à jour régulièrement la liste noire et la transmettre au serveur DNS 21 afin qu'elle soit réactualisée. Dans un autre exemple de réalisation, l'autre serveur de sécurité est le serveur de sécurité 22.

Le serveur de sécurité 22 est un serveur maîtrisé par un administrateur de sécurité, par exemple un administrateur du FAI intéressé par la mise en place de solutions de sécurité dans son réseau. Le serveur de sécurité 22 est adapté pour mettre en oeuvre des mesures de sécurité lors d'une attaque réseau en provenance d'ordinateurs organisés en « botnet », tel que le réseau 15 d'ordinateurs infectés. Le serveur de sécurité 22 comprend des instructions de code pour mettre en oeuvre les étapes d'un procédé de ralentissement d'une communication dans un réseau tel que décrit ci-dessous.

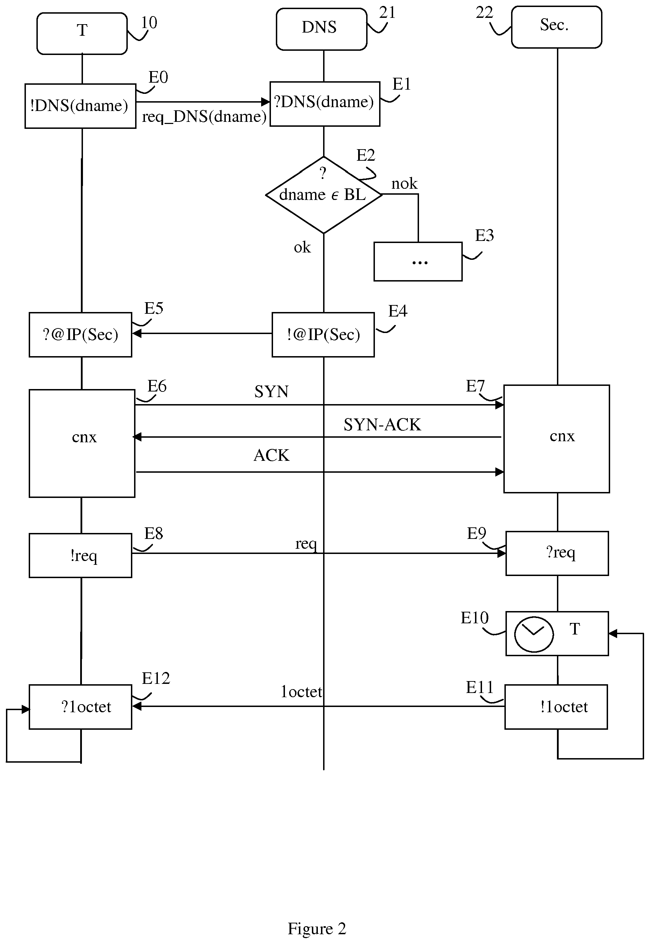

Les étapes d'un procédé de ralentissement d'une communication dans un réseau, selon un premier exemple de réalisation vont maintenant être décrites, en relation avec la figure 2.

On suppose que la liste noire des noms de domaine BL associée au logiciel malveillant qui infecte les ordinateurs 10, 11, 12 qui font partie du « botnet » 15 a été préalablement générée et est mémorisée dans une mémoire du serveur DNS 21. Dans l'exemple illustré par la figure 2, seul l'ordinateur infecté 10 est représenté.

Une phase préparatoire est destinée à identifier des demandes de connexion du logiciel malveillant au serveur de commande 20, et à intercepter ces demandes de manière à les rediriger vers le serveur de sécurité 22. Une telle redirection est destinée à établir une communication entre l'ordinateur 10, plus précisément le logiciel malveillant de l'ordinateur 10, et le serveur de sécurité 22, en faisant croire au logiciel malveillant qu'il est connecté au serveur de commande 20.

Cette phase préalable comprend une pluralité d'étapes.

Ainsi, dans une étape initiale E0 d'envoi de requête, l'ordinateur 10, plus précisément le logiciel malveillant installé sur l'ordinateur infecté 10, envoie au serveur DNS 21 une requête de résolution de nom de domaine req_DNS qui comprend un nom de domaine dname. Le nom de domaine dname a été généré pseudo-aléatoirement sur l'ordinateur 10 au moyen d'un logiciel de génération partagé par le logiciel malveillant et le serveur de commande 20. Par exemple, la requête de résolution comprend un nom de domaine de la forme « kljdgierg.co.ru ». La requête est reçue par le serveur DNS 21 du réseau dans une étape E1 de réception.

Le serveur DNS 21 du réseau interroge la liste noire BL et vérifie, dans une étape de test E2, si le nom de domaine dname qui figure dans la requête appartient à la liste noire BL.

Dans un cas où le nom n'appartient pas à la liste noire BL des noms de domaine (branche « nok » sur la figure 2), alors le serveur DNS 21 procède à la résolution du nom de domaine de façon classique et envoie à l'ordinateur 10, dans une étape E3 de réponse une réponse qui comprend l'adresse IP associée au nom de domaine si un enregistrement correspondant au nom de domaine a pu être identifié. Il envoie une erreur DNS si la résolution échoue.

Dans un deuxième cas où le nom de domaine fait partie de la liste noire BL des noms de domaine (branche « ok » sur la figure 2), le serveur DNS 21 envoie dans une étape E4 de réponse, une réponse qui comprend l'adresse IP du serveur de sécurité 22. Ainsi, à tous les noms de domaine qui figurent dans la liste noire BL, est associée dans le serveur DNS 21 l'adresse IP du serveur de sécurité 22. La réponse est reçue par l'ordinateur infecté 10 dans une étape E5 de réception.

Dans un premier exemple de réalisation, l'ordinateur 10, plus précisément le logiciel malveillant, utilise le protocole de transport « TCP » (de l'anglais « Transmission Control Protocol ») qui transporte les paquets d'une communication. Le protocole TCP est un protocole de transport de la couche 4 du modèle OSI (de l'anglais « Open System Interconnection ») qui fonctionne en mode connecté, c'est-à-dire qu'une session est établie entre deux parties qui veulent échanger des données, ici l'ordinateur infecté 10 et le serveur de commande 20.

Dans des étapes E6 et E7 d'établissement d'une connexion, l'ordinateur 10 envoie un paquet IP qui comprend dans le champ destinataire du paquet, l'adresse IP obtenue au cours de l'étape E5 de réception, et dans la partie donnée, une demande de connexion. Ainsi, l'ordinateur infecté 10, qui a obtenu l'adresse IP du serveur de sécurité 22 en réponse à la requête d'un nom de domaine associé au serveur de commande 20 envoie la demande de connexion au serveur de sécurité 22.La demande de connexion envoyée au serveur de sécurité 22 est conforme au protocole TCP et comprend donc l'envoi d'un paquet « SYN » de l'ordinateur infecté 10 au serveur de sécurité 22. Le serveur de sécurité 22 envoie à l'ordinateur infecté 10 un acquittement sous forme d'un paquet « SYN-ACK ». L'ordinateur infecté 10 envoie ensuite au serveur de sécurité 22 un paquet « ACK » correspondant à un message d'acceptation. Au terme des étapes E6 et E7 d'établissement d'une connexion, l'ordinateur infecté 10 et le serveur de sécurité 22 ont établi une session et sont aptes à communiquer.

Dans une étape suivante E8 d'émission d'une requête de transfert de données, l'ordinateur infecté 10 envoie une requête req qui comprend un ou plusieurs paquets IP. La requête req comprend par exemple une demande de mise à jour, une requête de commande, ou un ensemble de données dérobées sur l'ordinateur infecté 10. Le serveur de sécurité 22 reçoit la requête req dans une étape E9 de réception. De manière optionnelle, la requête req est mémorisée par le serveur de sécurité 22 pour une analyse future.

Dans une étape suivante E10 d'attente, le serveur de sécurité 22 se met en attente pendant une durée d'expiration. A cet effet, il arme une temporisation T, égale à la durée d'expiration, et reste en attente. La durée d'expiration est paramétrée pour être la plus longue possible tout en étant plus faible qu'un délai d'expiration associé au protocole TCP au terme duquel la connexion TCP est coupée en cas d'inactivité. En d'autres termes, en cas d'inactivité, la session de communication établie au moyen du protocole TCP est maintenue pendant le délai d'expiration. Le délai d'expiration TCP défini dans la « RFC793 » (de l'anglais « Request For Comments ») est par défaut de 5 minutes ; il peut cependant être spécifié par une application qui utilise TCP et peut donc être plus court. Dans l'exemple décrit ci, la durée d'expiration est comprise entre 1 et 2 minutes.

Dans une étape E11 d'envoi de données, mise en oeuvre à l'expiration de la temporisation T, le serveur de sécurité 22 génère pseudo-aléatoirement un unique octet de données et envoie un message qui comprend l'octet généré à l'ordinateur infecté 10. L'octet est reçu par l'ordinateur infecté 10 au cours d'une étape E12 de réception. Les étapes E10 et E11 sont ensuite réitérées : le serveur de sécurité 22, suite à l'envoi de données effectué au cours de l'étape E9, se place dans l'étape E10 d'attente au cours de laquelle la temporisation T est armée de nouveau. Dans l'étape suivante E11 réitérée, le serveur de sécurité 22 génère un octet de données pseudo-aléatoirement et envoie le paquet à l'ordinateur infecté 10.

Ainsi, le serveur de sécurité 22 met la connexion TCP en attente, avant de régénérer de manière cyclique un octet pseudo-aléatoire qu'il envoie à l'ordinateur infecté 10.

Grâce à cet envoi cyclique d'octet, la connexion TCP établie avec le logiciel malveillant de l'ordinateur 10 reste ouverte pendant une période qui peut être très longue, sans générer d'expiration au niveau de la couche protocolaire TCP. Du côté de l'ordinateur infecté 10, plus précisément du logiciel malveillant hébergé par l'ordinateur 10, un volume de données minimal empêche celui-ci de détecter rapidement que le serveur de sécurité 22 avec lequel il communique n'est pas le serveur de commande 20. En effet, il va attendre d'avoir reçu une quantité non négligeable de données avant de traiter ces données et de les interpréter, et s'apercevoir éventuellement que les données ne sont pas exploitables et ne proviennent pas du serveur de commande 20. Ceci reste vrai dans le cas où la communication habituellement utilisée entre l'ordinateur infecté 10 et le serveur de commande 20 est chiffrée

La durée d'expiration prend ici tout son sens. En effet, plus la durée d'expiration est longue, moins le serveur de sécurité 22 envoie de données à l'ordinateur infecté 10, et moins il y a de chance que l'ordinateur infecté 10 détecte rapidement que les données qui lui sont envoyées ne sont pas significatives.

Il est connu que plus de 80% des virus/logiciels malveillants existants utilisent le protocole TCP. Par exemple, beaucoup de virus sont basés sur le protocole « http » (de l'anglais « HyperText Transfer Protocol »). En effet, les serveurs de commande sont la plupart du temps des sites web piratés. Ainsi, le procédé décrit ici est applicable à de nombreux virus.

L'exemple décrit ici repose sur l'utilisation du protocole TCP. Bien que l'invention s'applique particulièrement bien à des logiciels qui utilisent le protocole TCP, elle n'est pas limitée à ce protocole de transport. Dans un autre exemple de réalisation, le procédé est mis en oeuvre lorsque le logiciel malveillant repose sur le protocole de transport « UDP » (de l'anglais « User Datagram Protocol »). Le protocole UDP est adapté pour permettre la communication de données entre deux entités de manière simple. Contrairement au protocole TCP, il fonctionne sans négociation : il n'y a donc pas de mise en oeuvre des étapes E6 et E7 d'établissement d'une connexion dans cet exemple de réalisation.

Dans l'étape E8 d'émission d'une requête de transfert de données, l'ordinateur infecté 10 envoie une requête req qui comprend un ou plusieurs paquets IP.

Dans l'étape suivante E10 d'attente, le serveur de sécurité 22 se met en attente pendant une durée d'expiration définie pour le protocole UDP. Il arme à cet effet la temporisation T. La durée d'expiration est cependant plus courte que dans le cas du protocole TCP, puisque le délai d'expiration pour UDP dépend de l'application ; elle dépend donc du logiciel malveillant. En général, le délai d'expiration est de l'ordre de quelques secondes à quelques dizaines de secondes. Dans l'exemple de réalisation décrit ici, la durée d'expiration est par exemple fixée à 10 secondes.

Dans l'étape E11 d'envoi de données, mise en oeuvre à l'expiration de la temporisation T, le serveur de sécurité 22 génère pseudo-aléatoirement un unique octet de données et envoie un message comprenant l'octet généré à l'ordinateur infecté 10. Dans un exemple de réalisation, et lorsque cela est autorisé par le réseau, l'étape E11 d'envoi de données peut être mise en oeuvre en indiquant dans l'entête IP du paquet de données que le message IP qui comprend le paquet envoyé est fragmenté. La fragmentation de paquets IP est standardisée et décrite dans la RFC791. Elle permet d'indiquer qu'un message IP est incomplet. Ainsi, un équipement qui reçoit un paquet IP fragmenté se met en attente des paquets IP suivants pendant une durée de 1 à 2 minutes, puis il réassemble le message à partir des paquets reçus avant de le présenter à une application, ici le logiciel malveillant. Ce mécanisme permet ainsi de maintenir artificiellement l'ordinateur infecté 10 dans un état d'attente sur le protocole UDP. Cela améliore l'efficacité du procédé dans le cas du protocole UDP.

Les étapes E10 et E11, comme pour le protocole TCP, sont réitérées.

On note que l'efficacité du procédé de prévention d'attaque repose, dans le cas du protocole TCP, sur des caractéristiques standards du protocole. Dans le cas d'UDP, l'efficacité du procédé dépend de l'implémentation du logiciel malveillant, elle est de ce fait plus variable.

Si la majorité des logiciels malveillants utilisent les protocoles TCP et http pour communiquer avec leur serveur de commande, certains utilisent des protocoles propriétaires sur le protocole UDP afin de rendre difficile leur détection. Ainsi, certains virus connus utilisent le protocole UDP sur un port particulier, en l'espèce le port 53, afin de dissimuler leur trafic dans un trafic DNS légitime. L'exemple de réalisation basé sur le protocole UDP s'applique à ce type de logiciel malveillant.

Dans les exemples de réalisation décrits précédemment, le serveur de sécurité 22 est indépendant du serveur DNS 21. Dans l'exemple décrit, le serveur DNS 21 mémorise la liste noire BL et répond à une requête DNS relative à un nom de domaine appartenant à la liste noire BL en fournissant en réponse l'adresse IP du serveur de sécurité 22.

Dans un autre exemple de réalisation, non représenté, le serveur de sécurité 22 intègre une fonction de relais DNS ainsi que des instructions de code pour la mise en oeuvre des étapes E1 de réception de la requête DNS, E2 de test, E3 et E4 de réponse telles que décrites en relation avec la figure 2. Dans ce cas, le serveur de sécurité 22 est par exemple une passerelle résidentielle « xDSL »/fibre (de l'anglais « x Digital Subscriber Line ») du FAI, destinée à offrir à un utilisateur abonné, une pluralité de services : accès à Internet, téléphonie fixe, télévision. Cette implémentation présente l'avantage de proposer une solution de sécurité qui est distribuée au niveau des passerelles résidentielles et non plus centralisée dans quelques serveurs. Cela rend difficile des attaques contre les serveurs de sécurité qui mettent en oeuvre la solution décrite précédemment. Par ailleurs, il existe des cas où les logiciels malveillants embarquent une liste noire d'adresses IP qui comprend à des adresses IP de machines identifiées comme mettant en oeuvre des solutions de sécurité. Lorsqu'un logiciel malveillant est redirigé vers une machine dont l'adresse figure dans leur liste noire, il refuse la communication et cherche un autre point de rendez-vous avec le serveur de commande 20. Lorsque la solution de sécurité est répartie sur des passerelles résidentielles, cela rend impossible la construction d'une liste noire propre au logiciel malveillant. En particulier, si le logiciel malveillant qui infecte un ordinateur d'un réseau résidentiel intègre dans sa liste noire l'adresse IP de la passerelle résidentielle dont il dépend, il ne pourra plus communiquer avec aucun équipement extérieur au réseau résidentiel. Enfin, lorsqu'un botnet comprend des ordinateurs qui font partie d'un ou plusieurs réseau(x) résidentiel(s), un serveur de sécurité du réseau n'a aucune possibilité de déterminer quels ordinateurs sont infectés. En effet, au mieux, il obtient des informations, comme l'adresse IP de la/les passerelle(s) résidentielle(s) qui assure(nt) l'interface entre le réseau Internet et le réseau résidentiel et qui comprend un ou des ordinateurs infectés, mais il n'obtient aucune information sur le ou les ordinateurs infectés. En intégrant la solution de sécurité dans les passerelles résidentielles, les ordinateurs infectés peuvent être identifiés.

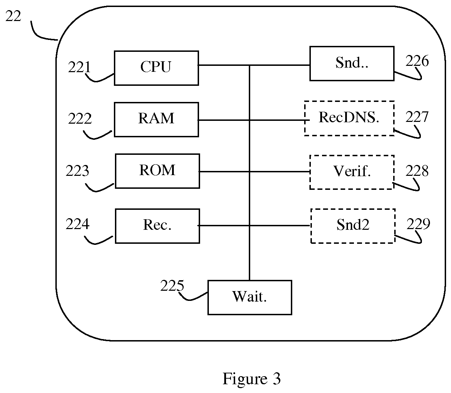

Un serveur de sécurité 22, selon un exemple de réalisation de l'invention, va maintenant être décrit en relation avec la figure 3.

Le serveur de sécurité 22 est un équipement du réseau. C'est un dispositif informatique qui comprend :
- un microprocesseur 221, ou « CPU » (de l'anglais «Central Processing Unit »), destiné à charger des instructions en mémoire, à les exécuter, à effectuer des opérations ;
- un ensemble de mémoires, dont une mémoire volatile 222, ou « RAM » (pour « Random Access Memory ») utilisée pour exécuter des instructions de code, stocker des variables, etc., une mémoire de stockage 223 de type « ROM » ou « EEPROM » (de l'anglias « Read Only Memory » et « Electronically-Erasable Programmable Read-Only Memory). La mémoire de stockage 223 est agencée pour mémoriser une application qui comprend des instructions de code pour mettre en oeuvre les étapes du procédé de prévention d'attaques dans un réseau ;

Le serveur de sécurité 22 comprend également les moyens suivants :
- des moyens 224 de réception d'une requête de transfert de données, agencés pour recevoir en provenance de l'ordinateur une requête de transfert de données, la réception de ladite requête indiquant que l'adresse IP du serveur de sécurité a été fournie à l'ordinateur en réponse à une requête de résolution de nom de domaine comprenant un nom de domaine associé à l'adresse IP du serveur de commande, ledit nom de domaine étant compris dans une liste noire (BL) de noms de domaine. Les moyens 224 de réception d'une requête de transfert de données sont agencés pour mettre en oeuvre l'étape E9 de réception d'une requête de transfert de données du procédé décrit précédemment ;
- des moyens d'attente 225, agencés pour attendre pendant une durée inférieure à un délai d'expiration pour un protocole de transport transportant des paquets de la communication, une session étant maintenue pendant ce délai d'expiration en cas d'inactivité. Les moyens d'attente sont agencés pour mettre en oeuvre l'étape E10 d'attente du procédé décrit précédemment ;
- des moyens 226 d'envoi de paquets, agencés pour envoyer un paquet comprenant un octet de données généré pseudo-aléatoirement afin de maintenir la session active. Les moyens d'envoi 226 sont agencés pour mettre en oeuvre l'étape E11 d'envoi du procédé décrit précédemment.

Les moyens 224 de réception d'une requête de transfert de données, 225 d'attente et 226 d'envoi sont de préférence des modules logiciels comprenant des instructions logicielles pour exécuter les étapes du procédé de ralentissement d'une communication dans un réseau tel que décrit précédemment.

Dans un deuxième exemple de réalisation de l'invention, le serveur de sécurité 22 est un dispositif qui comprend des moyens de résolution de requêtes DNS ainsi que des instructions de code pour mettre en oeuvre les étapes E1 de réception d'une requête de résolution de nom de domaine, E2 de test et E3 et E4 de réponse du procédé décrit précédemment. Dans cet exemple, la mémoire de stockage 223 est agencée pour mémoriser une liste noire BL de noms de domaine. Dans cet exemple de réalisation, le serveur de sécurité 22 comprend les moyens suivants, représentés en pointillés sur la figure 3 :
- des moyens 227 de réception d'une requête de résolution de nom de domaine, agencés pour recevoir une requête de résolution de nom de domaine.
- des moyens de vérification 228, agencés pour vérifier que le nom de domaine requis appartient à une liste noire de noms de domaine, et
- des moyens 229 d'envoi d'adresses, agencés pour envoyer, en réponse à la requête, l'adresse IP du serveur de sécurité.

Les moyens de réception 227, de vérification 228 et les deuxièmes moyens d'envoi 229 sont de préférence des modules logiciels.

Dans cet exemple de réalisation, le serveur de sécurité 22 est par exemple un équipement en coupure entre des ordinateurs infectés et le réseau Internet. Dans un exemple de réalisation, le serveur de sécurité 22 est une passerelle résidentielle qui comprend un relais DNS. Dans un autre exemple de réalisation, le serveur de sécurité 22 est un firewall applicatif qui intègre une fonction de relais DNS.

## Revendications

1. Procédé de ralentissement d'une communication dans un réseau comprenant au moins un ordinateur (10), ledit ordinateur comprenant un logiciel malveillant visant à établir une communication avec un serveur de commande (20), ledit procédé comprenant les étapes suivantes, mises en oeuvre par un serveur de sécurité du réseau (22) :
- réception (E9) d'une requête de transfert de données en provenance de l'ordinateur, ladite réception indiquant que l'adresse IP du serveur de sécurité a été fournie à l'ordinateur en réponse à une requête de résolution de nom de domaine comprenant un nom de domaine associé à l'adresse IP du serveur de commande, ledit nom de domaine étant compris dans une liste noire (BL) de noms de domaine,
**caractérisé en ce qu'**il comprend également :
- une étape d'attente (E10) pendant une durée inférieure à un délai d'expiration pour un protocole de transport transportant des paquets de la communication, une session étant maintenue pendant ce délai d'expiration en cas d'inactivité,
- une étape d'envoi (E11), mise en oeuvre après l'étape d'attente, d'un paquet comprenant un octet de données généré pseudo-aléatoirement afin de maintenir la session active.

2. Procédé selon la revendication 1, comprenant au moins une itération des étapes d'attente et d'envoi d'un paquet jusqu'à fermeture de la session par l'ordinateur.

3. Procédé selon l'une des revendications précédentes, comprenant en outre :
- une étape (E1) de réception d'une requête de résolution de nom de domaine,
- une étape (E2) de vérification que le nom de domaine requis appartient à la liste noire des noms de domaine,
- une étape d'envoi (E4), en réponse à la requête, de l'adresse IP du serveur de sécurité.

4. Procédé selon l'une des revendications précédentes, dans lequel la requête de transfert de données est conforme au protocole TCP.

5. Procédé selon la revendication 4, dans lequel la durée est comprise entre une et deux minutes.

6. Procédé selon l'une des revendications 1 à 3, dans lequel la requête de transfert de données est conforme au protocole UDP.

7. Procédé selon la revendication 6, dans lequel l'entête du paquet envoyé au cours de l'étape d'envoi comprend un champ indiquant qu'une fragmentation IP est mise en oeuvre.

8. Serveur (22) de sécurité du réseau, destiné à ralentir une communication dans un réseau comprenant au moins un ordinateur, ledit ordinateur comprenant un logiciel malveillant visant à établir une communication avec un serveur de commande (20), ledit serveur de sécurité comprenant :
- des moyens (224) de réception d'une requête de transfert de données, agencés pour recevoir en provenance de l'ordinateur une requête de transfert de données, la réception de ladite requête indiquant que l'adresse IP du serveur de sécurité a été fournie à l'ordinateur en réponse à une requête de résolution de nom de domaine comprenant un nom de domaine associé à l'adresse IP du serveur de commande, ledit nom de domaine étant compris dans une liste noire (BL) de noms de domaine,
**caractérisé en ce que** le serveur (22) comprend également :
- des moyens d'attente (225), agencés pour attendre pendant une durée inférieure à un délai d'expiration pour un protocole de transport transportant des paquets de la communication, une session étant maintenue pendant ce délai d'expiration en cas d'inactivité,
- des moyens (226) d'envoi de paquets, agencés pour envoyer, au terme de la durée d'attente, un paquet comprenant un octet de données généré pseudo-aléatoirement afin de maintenir la session active.

9. Serveur de sécurité selon la revendication 8, comprenant :
- des moyens (227) de réception d'une requête de résolution de nom de domaine, agencés pour recevoir une requête de résolution de nom de domaine,
- des moyens de vérification (228), agencés pour vérifier que le nom de domaine requis appartient à une liste noire de noms de domaine,
- des moyens (229) d'envoi d'adresses, agencés pour envoyer, en réponse à la requête, l'adresse IP du serveur de sécurité.

10. Passerelle résidentielle du réseau comprenant un serveur de sécurité selon la revendication 9.

11. Programme d'ordinateur destiné à être installé dans une mémoire d'un serveur de sécurité, comprenant des instructions pour la mise en oeuvre des étapes du procédé de ralentissement d'une communication dans un réseau selon l'une des revendications 1 à 7, lorsque le programme est exécuté par un processeur du serveur de sécurité.

12. Support de données sur lequel est enregistré le programme selon la revendication 11.

## Patentansprüche

1. Verfahren zum Verlangsamen einer Kommunikation in einem Netzwerk, umfassend mindestens einen Computer (10), wobei der Computer ein Schadprogramm umfasst, das darauf abzielt, eine Kommunikation mit einem Steuerungsserver (20) herzustellen, wobei das Verfahren die folgenden Schritte umfasst, die von einem Sicherheitsserver des Netzwerks (22) ausgeführt werden:
- Empfangen (E9) einer Anforderung zur Übertragung von Daten, die von dem Computer kommt, wobei das Empfangen angibt, dass die IP-Adresse des Sicherheitsservers in Reaktion auf eine Anforderung zur Domainnamenauflösung umfassend einen Domainnamen, der mit der IP-Adresse des Steuerungsservers in Verbindung steht, an den Computer geliefert wurde, wobei der Domainname in einer schwarzen Liste (BL) von Domainnamen enthalten ist, **dadurch gekennzeichnet, dass** es ferner Folgendes umfasst:
- einen Schritt des Wartens (E10) während einer Dauer, die kürzer als eine Ablaufzeit für ein Transportprotokoll ist, das Pakete der Kommunikation transportiert, wobei eine Sitzung während dieser Ablaufzeit im Fall von Inaktivität aufrechterhalten wird,
- einen Schritt des Sendens (E11), der nach dem Schritt des Wartens ausgeführt wird, eines Pakets, das ein Daten-Byte umfasst, das pseudo-zufällig erzeugt wird, um die Sitzung aktiv zu halten.

2. Verfahren nach Anspruch 1, umfassend mindestens eine Iteration der Schritte des Wartens und des Sendens eines Pakets bis zur Schließung der Sitzung durch den Computer.

3. Verfahren nach einem der vorhergehenden Ansprüche, ferner umfassend:
- einen Schritt (E1) des Empfangens einer Anforderung zur Domainnamenauflösung,
- einen Schritt (E2) des Überprüfens, dass der erforderliche Domainname zu der schwarzen Liste der Domainnamen gehört,
- einen Schritt des Sendens (E4) der IP-Adresse des Sicherheitsservers in Reaktion auf die Anforderung.

4. Verfahren nach einem der vorhergehenden Ansprüche, wobei die Anforderung zur Übertragung von Daten dem Protokoll TCP entspricht.

5. Verfahren nach Anspruch 4, wobei die Dauer zwischen einer und zwei Minuten beträgt.

6. Verfahren nach einem der Ansprüche 1 bis 3, wobei die Anforderung zur Übertragung von Daten dem Protokoll UDP entspricht.

7. Verfahren nach Anspruch 6, wobei der Header des Pakets, das im Zuge des Schritts des Sendens gesendet wurde, ein Feld umfasst, das angibt, dass eine IP-Fragmentierung ausgeführt ist.

8. Sicherheitsserver (22) des Netzwerks zum Verlangsamen einer Kommunikation in einem Netzwerk, umfassend mindestens einen Computer, wobei der Computer ein Schadprogramm umfasst, das darauf abzielt, eine Kommunikation mit einem Steuerungsserver (20) herzustellen, der Sicherheitsserver umfassend:
- Mittel (224) zum Empfangen einer Anforderung zur Übertragung von Daten, die angeordnet sind, eine Anforderung zur Übertragung von Daten zu empfangen, die von dem Computer kommt, wobei das Empfangen der Anforderung angibt, dass die IP-Adresse des Sicherheitsservers in Reaktion auf eine Anforderung zur Domainnamenauflösung umfassend einen Domainnamen, der mit der IP-Adresse des Steuerungsservers in Verbindung steht, an den Computer geliefert wurde, wobei der Domainname in einer schwarzen Liste (BL) von Domainnamen enthalten ist,
**dadurch gekennzeichnet, dass** der Server (22) ebenfalls Folgendes umfasst:
- Mittel zum Warten (225), die angeordnet sind, während einer Dauer zu warten, die kürzer als eine Ablaufzeit für ein Transportprotokoll ist, das Pakete der Kommunikation transportiert, wobei eine Sitzung während dieser Ablaufzeit im Fall von Inaktivität aufrechterhalten wird,
- Mittel (226) zum Senden von Paketen, die angeordnet sind, am Ende der Wartedauer ein Paket zu senden, das ein Daten-Byte umfasst, das pseudo-zufällig erzeugt wird, um die Sitzung aktiv zu halten.

9. Sicherheitsserver nach Anspruch 8, umfassend:
- Mittel (227) zum Empfangen einer Anforderung zur Domainnamenauflösung, die angeordnet sind, eine Anforderung zur Domainnamenauflösung zu empfangen,
- Mittel zum Überprüfen (228), die angeordnet sind, zu überprüfen, dass der erforderliche Domainname zu einer schwarzen Liste von Domainnamen gehört,
- Mittel (229) zum Senden von Adressen, die angeordnet sind, in Reaktion auf die Anforderung die IP-Adresse des Sicherheitsservers zu senden.

10. Residential Gateway des Netzwerks, umfassend einen Sicherheitsserver nach Anspruch 9.

11. Computerprogramm, das dazu bestimmt ist, in einem Speicher eines Sicherheitsservers installiert zu sein, umfassend Anweisungen für die Ausführung der Schritte des Verfahrens zum Verlangsamen einer Kommunikation in einem Netzwerk nach einem der Ansprüche 1 bis 7, wenn das Programm von einem Prozessor des Sicherheitsservers ausgeführt wird.

12. Datenträger, auf dem das Programm nach Anspruch 11 gespeichert ist.

## Claims

1. Method of slowing down a communication in a network including at least one computer (10), said computer including malware aimed at establishing a communication with a command server (20), said method including the following steps, implemented by a security server on the network (22):
- reception (E9) of a request to transfer data originating from the computer, said reception indicating that the IP address of the security server has been provided to the computer in response to a domain name resolution request including a domain name associated with the IP address of the command server, said domain name being included in a domain name black list (BL),
**characterized in that** it also includes:
- a step of waiting (E10) for a duration of less than a timeout period for a transport protocol transporting communication packets, a session being maintained during this timeout period in the event of inactivity,
- a step of sending (E11) a packet including a pseudo-randomly generated byte of data in order to maintain the session active, which step is implemented after the waiting step.

2. Method according to Claim 1, including at least one iteration of the steps of waiting and sending a packet until closure of the session by the computer.

3. Method according to either of the preceding claims, further including:
- a step (E1) of receiving a domain name resolution request,
- a step (E2) of verifying that the requested domain name belongs to the domain name black list,
- a step of sending (E4), in response to the request, the IP address of the security server.

4. Method according to one of the preceding claims, in which the request to transfer data is compliant with the TCP protocol.

5. Method according to Claim 4, in which the duration is between one and two minutes.

6. Method according to one of Claims 1 to 3, in which the request to transfer data is compliant with the UDP protocol.

7. Method according to Claim 6, in which the header of the packet sent in the course of the step of sending includes a field indicating that an IP fragmentation is implemented.

8. Security server (22) on the network, intended to slow down a communication in a network including at least one computer, said computer including malware aimed at establishing a communication with a command server (20), said security server including:
- means (224) of receiving a request to transfer data, arranged for receiving a request to transfer data originating from the computer, the reception of said request indicating that the IP address of the security server has been provided to the computer in response to a domain name resolution request including a domain name associated with the IP address of the command server, said domain name being included in a domain name black list (BL),
**characterized in that** the server (22) also includes:
- waiting means (225), arranged for waiting for a duration of less than a timeout period for a transport protocol transporting communication packets, a session being maintained during this timeout period in the event of inactivity,
- packet sending means (226), arranged for sending, after the waiting period, a packet including a pseudo-randomly generated byte of data in order to maintain the session active.

9. Security server according to Claim 8, including:
- means (227) of receiving a domain name resolution request, arranged for receiving a domain name resolution request,
- means of verifying (228), arranged for verifying that the requested domain name belongs to a domain name black list,
- address sending means (229), arranged for sending, in response to the request, the IP address of the security server.

10. Residential gateway on the network including a security server according to Claim 9.

11. Computer program intended to be installed in a memory of a security server, including instructions for the implementation of the steps in the method of slowing down a communication in a network according to one of Claims 1 to 7, when the program is executed by a processor of the security server.

12. Data medium on which the program according to Claim 11 is recorded.
